# EUROPEAN PATENT APPLICATION

(11) **EP 3 715 591 A1**
(43) Date of publication of application: **30.09.2020**
(21) Application number: 19165555.4
(22) Date of filing: 27.03.2019
(51) Int. Cl.: F01D 25/24, F16B 7/20, F16B 21/04

(54) **FLANGE COUPLING ARRANGEMENT**

(71) Applicant: Rolls-Royce Deutschland Ltd & Co KG, 15827 Blankenfelde-Mahlow (DE)
(72) Inventor: Cerullo, Michele, 15827 Blankenfelde-Mahlow (DE)

(57) **Abstract**

Disclosed is flange coupling arrangement (700) comprising first radial flange (100) having mating face (102), extended portion (104), first projections (106), and first gaps (114) therebetween; second radial flange (200) having mating face (202), extended portion (204), second projections (206) and second gaps (216) therebetween; and inserts (600). The first radial flange and the second radial flange are axially aligned with each other such that the second projections are received in between the mating face of the first radial flange and the corresponding first projections, and such that first projections with second projections, and respective first gaps with second gaps therebetween, are axially aligned with each other. Further, each of the inserts is arranged in one of axially aligned pairs of the first gap and the second gap. Further, a method of coupling a first radial flange with a second radial flange is disclosed.

## Description

### TECHNICAL FIELD

The present disclosure relates generally to gas turbine engines; and more specifically, to a flange coupling arrangement and a flange coupling method for coupling components of the gas turbine engines.

### BACKGROUND

Typically, gas turbine engines are used to power aircrafts, watercrafts, power generators and the like. These gas turbine engines comprise a number of components that are assembled in series and axially. Some of the components are mechanically engaged and fastened together utilizing various types of fasteners and alignment elements. In a conventional scenario for fastening a fan case to a mounting case in a gas turbine engine, a number of bolts and pins may be used to both align and maintain an attachment of the two cases. More specifically, a set of pins disposed in pin holes in the fan case and the mounting case maintain alignment and reduce or eliminate radial and circumferential movement. A set of bolts are used to keep the fan case and the mounting case fastened together to prevent separation of the fan case and the mounting case in an axial direction.

Further, some of the components in the gas turbine engine are rotating components that transmit torque to one or more other components. Such components are commonly subjected to high loads, temperatures and pressures. Therefore, it is of utmost importance to couple the components of the gas turbine engines for efficient transfer of torsional forces (for example, from turbine to compressor), while providing resistance to axial loads, bending moments and the like. Generally, the efficiency of the transfer of torsional forces (torque along the axis) and thereby, the output efficiency of the gas turbine engines can be increased by increasing the operating temperature thereof. However, the conventional fasteners, coupling arrangements and alignment elements tend to fail at such demanding operating conditions.

Further, the conventional fasteners and coupling arrangements such as bolted joints, teethed coupling arrangements such as curvic couplings are associated with a number of problems. One of the major problems with bolted joints, in small-medium engines, is that the assembly of bolted joints is challenging as the radius pitch is small. Furthermore, bolted joints have low reserve factors and require a detailed, sophisticated and expensive assessment. Another major problem associated with the conventional fasteners is the high scatter in the bolt preload, thereby leading to a difficulty in estimation of the correct friction coefficient, which leads to conservative assumptions in the design and component lifing analysis. Further, in case of any failure, bending moments and reaction forces may lead to an axial displacement of the shafts, flanges which is highly undesirable.

To counter these problems to an extent, the traditional approaches involve designing coupling arrangements for use in the gas turbine engine with a large conservativism in the assessments. However, this may lead to a reduced design space. Such limited design space results in a limited assembly space for small and medium engines (as with lower pitch radius, there is less space for bolts), which combined with the high loads and temperatures, represents a limit for future applications at desired higher temperatures and pressures.

Therefore, in light of the foregoing discussion, there exists a need to overcome the aforementioned drawbacks associated with conventional coupling arrangements. In particular, there is a need to provide a coupling arrangement which can be employed for both static and rotating joints, suitable for both low and high operating temperature conditions, and which is able to generally withstand loads in failure cases.

### SUMMARY

The present disclosure seeks to provide a flange coupling arrangement and a flange coupling method. The present disclosure seeks to provide a solution to the existing problem of failure of coupling arrangements required to couple components of a gas turbine engine at demanding operating conditions, such as high temperatures and high pressures. An aim of the present disclosure is to provide a solution that overcomes at least partially the problems encountered in prior art, and provides an efficient and a cost-effective coupling arrangement that can be easily and readily employed for coupling of components of a gas turbine engine or the like.

Embodiments of the present disclosure provide a flange coupling arrangement comprising:
a first radial flange having a mating face, an extended portion and two or more first projections such that the two or more first projections are axially spaced apart from the mating face and the extended portion extends between the mating face and the two or more first projections therein, wherein the two or more first projections are disposed along periphery of the extended portion of the first radial flange to define first gaps therebetween;
a second radial flange having a mating face, an extended portion and two or more second projections such that the two or more second projections are axially spaced apart from the mating face and the extended portion extends between the mating face and the two or more second projections therein, wherein the two or more second projections are disposed along periphery of the extended portion of the second radial flange to define second gaps therebetween; and
two or more inserts,
wherein the first radial flange and the second radial flange are axially aligned with each other such that the two or more second projections are received in between the mating face of the first radial flange and the corresponding two or more first projections, and such that the two or more first projections with the two or more second projections, and the respective first gaps with the second gaps therebetween, are axially aligned with each other, and
wherein each of the two or more inserts is arranged in one of axially aligned pairs of the first gap and the second gap.

Embodiments of the present disclosure substantially eliminate or at least partially address the aforementioned problems in the prior art, and provides an efficient and cost-effective flange coupling arrangement that is able to withstand demanding operating conditions such as high temperatures and high pressures, when used to couple components of a gas turbine engine.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is an illustration of a perspective view of a first radial flange, in accordance with an embodiment of the present disclosure;
FIG. 2 is an illustration of a perspective view of a second radial flange, in accordance with an embodiment of the present disclosure;
FIG. 3 is an illustration depicting a step involved in alignment of the first radial flange of FIG. 1 and the second radial flange of FIG. 2, in accordance with an embodiment of the present disclosure;
FIG. 4 is an illustration of an arrangement obtained by axially aligning the first radial flange of FIG. 1 and the second radial flange of FIG. 2, in accordance with an embodiment of the present disclosure;
FIG. 5 is an illustration of a partial enlarged perspective view of the arrangement of FIG. 4, in accordance with an embodiment of the present disclosure;
FIG. 6 is an illustration of a perspective view of an insert, in accordance with an embodiment of the present disclosure;
FIG. 7 is an illustration of a perspective view of a flange coupling arrangement, in accordance with an embodiment of the present disclosure; and
FIG. 8 is an illustration of an exploded view of the flange coupling arrangement of FIG. 7, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

Embodiments of the present disclosure provide a flange coupling arrangement comprising:
a first radial flange having a mating face, an extended portion and two or more first projections such that the two or more first projections are axially spaced apart from the mating face and the extended portion extends between the mating face and the two or more first projections therein, wherein the two or more first projections are disposed along periphery of the extended portion of the first radial flange to define first gaps therebetween;
a second radial flange having a mating face, an extended portion and two or more second projections such that the two or more second projections are axially spaced apart from the mating face and the extended portion extends between the mating face and the two or more second projections therein, wherein the two or more second projections are disposed along periphery of the extended portion of the second radial flange to define second gaps therebetween; and
two or more inserts,
wherein the first radial flange and the second radial flange are axially aligned with each other such that the two or more second projections are received in between the mating face of the first radial flange and the corresponding two or more first projections, and such that the two or more first projections with the two or more second projections, and the respective first gaps with the second gaps therebetween, are axially aligned with each other, and
wherein each of the two or more inserts is arranged in one of axially aligned pairs of the first gap and the second gap.

The flange coupling arrangement comprises the first radial flange having the mating face, the extended portion and the two or more first projections. The two or more first projections are axially spaced apart from the mating face and the extended portion extends between the mating face and the two or more first projections. Further, the two or more first projections are disposed along periphery of the extended portion of the first radial flange to define first gaps therebetween. The first radial flange is an annular structure having a hollow portion. The first radial flange has an inner annular periphery and an outer annular periphery such that a surface extending between the inner annular periphery and the outer annular periphery is defined as the mating face of the first radial flange. A diameter of the inner annular periphery corresponds to a diameter of the hollow portion of the first radial flange. The extended portion of the first radial flange is extending from the outer annular periphery of the first radial flange. The extended portion of the first radial flange extends in an axial direction of the first radial flange. The term "*axial direction of the first radial flange*" refers to a direction that is parallel to a central axis of the first radial flange. Herein, the term "*central axis of the first radial flange*" refers to an imaginary line passing through a center of the hollow portion of the first radial flange such that the imaginary line is perpendicular to the mating face of the first radial flange. The extended portion extends in the axial direction from the outer annular periphery of the first radial flange such that the extended portion is perpendicular to the mating face of the first radial flange. The two or more first projections are connected perpendicularly to the periphery of the extended portion of the first radial flange and extend towards the central axis of the first radial flange. The two or more first projections are axially spaced apart from the mating face of the first radial flange. Further, the two or more first projections are spaced apart from each other such that spaces between each of the two or more first projections define the first gaps therebetween. Herein, a first gap is defined between edges of adjacent projections of the two or more first projections, wherein such an edge (referred to as "*first torque transmitting face*" herein after) is perpendicular to the axial direction of the first radial flange.

In an embodiment, the two or more first projections are equiangularly disposed along the periphery of the extended portion of the first radial flange. In other words, the two or more first projections are disposed at equal angles from the central axis of the first radial flange such that a circumferential width of the first gaps is equal. In an example, the first radial flange may have two first projections disposed along the periphery of the extended portion of the first radial flange. In such configuration, the two first projections may be located at an angle of 180 degrees along the periphery of the extended portion of the first radial flange. In another example, the first radial flange may have three first projections disposed along the periphery of the extended portion of the first radial flange. In such configuration, the three first projections may be located at angles of 120 degrees along the periphery of the extended portion of the first radial flange. Optionally, the circumferential width of the first gaps is equal to a circumferential width of the two or more first projections.

Further, the flange coupling arrangement comprises the second radial flange having the mating face, the extended portion and the two or more second projections. The two or more second projections are axially spaced apart from the mating face and the extended portion extends between the mating face and the two or more second projections. Further, the two or more second projections are disposed along periphery of the extended portion of the second radial flange to define second gaps therebetween. The second radial flange is also an annular structure having a hollow portion. The second radial flange comprises an inner annular periphery and an outer annular periphery such that a surface extending between the inner annular periphery and the outer annular periphery is defined as the mating face of the second radial flange. A diameter of the inner annular periphery corresponds to a diameter of the hollow portion of the second radial flange. The extended portion of the second radial flange is extending from the inner annular periphery of the second radial flange. The extended portion of the second radial flange extends in an axial direction of the second radial flange. The term "*axial direction of the second radial flange*" refers to a direction that is parallel to a central axis of the second radial flange. Herein, the term "*central axis of the second radial flange*" refers to an imaginary line passing through a center of the hollow portion of the second radial flange such that the imaginary line is perpendicular to the mating face of the second radial flange. The extended portion extends in the axial direction from the outer annular periphery of the second radial flange such that the extended portion is perpendicular to the mating face of the second radial flange. The two or more second projections are connected perpendicularly to the periphery of the extended portion of the second radial flange and extend away from the central axis of the second radial flange. The two or more second projections are axially spaced apart from the mating face of the second radial flange. Further, the two or more first projections are spaced apart from each other such that spaces between each of the two or more second projections define the second gaps therebetween. Herein, a second gap is defined between edges of adjacent projections of the two or more second projections, wherein such an edge (referred to as "*second torque transmitting face*" herein after) is perpendicular to the axial direction of the second radial flange.

In an embodiment, the two or more second projections are equiangularly disposed along the periphery of the extended portion of the second radial flange. The two or more second projections are disposed at equal angles from the central axis of the second radial flange such that a circumferential width of the second gaps is equal. In an example, the second radial flange may have two second projections disposed along the periphery of the extended portion of the second radial flange. In such configuration, the two second projections may be located at an angle of 180 degrees along the periphery of the extended portion of the second radial flange. In another example, the second radial flange may have three second projections disposed along the periphery of the extended portion of the second radial flange. In such configuration, the three second projections may be located at angles of 120 degrees along the periphery of the extended portion of the second radial flange. Optionally, the circumferential width of the second gaps is equal to a circumferential width of the two or more second projections. It will be appreciated that a number of two or more first projections of the first radial flange corresponds to a number of two or more second projections of the second radial flange.

In the flange coupling arrangement, the first radial flange and the second radial flange are axially aligned with each other such that the two or more second projections are received in between the mating face of the first radial flange and the corresponding two or more first projections. Herein, the two or more first projections and the two or more second projections, and the respective first gaps and the second gaps therebetween, are axially aligned with each other. The two or more second projections are received in between the mating face of the first radial flange and the corresponding two or more first projections such that one face of the two or more second projections comes in contact with the mating face of the first radial flange and another face of the two or more second projections comes in contact with the corresponding two or more first projections. The two or more second projections fit in between the mating face of the first radial flange and the two or more first projections such that a space between the mating face and the two or more second projections, and a space between the two or more second projections and the two or more first projections is negligible.

Notably, dimensions of the first gaps are equal to dimensions of the second gaps. Further, relative angle between the two or more first projections and the two or more second projections is zero, when the first radial flange is axially aligned with the second radial flange. Such an axial alignment also allows the respective first gaps and the second gaps to align axially, when the first radial flange and the second radial flange are axially aligned. Therefore, each of the first gaps between the adjacent two or more first projections and each of the second gaps between the adjacent two or more second projections align axially.

Furthermore, the flange coupling arrangement comprises two or more inserts such that each of the two or more inserts is arranged in one of axially aligned pairs of the first gap and the second gap. The two or more inserts are arranged in one of the axially aligned pairs of the first gap and the second gap in order to restrict a relative movement between the first radial flange and the second radial flange. In an embodiment, the mating face of one of the first radial flange and the second radial flange comprises two or more radial cavities. Each of the two or more radial cavities is mutually aligned with one of the axially aligned pairs of the first gap and the second gap. The two or more radial cavities are provided on mating face of any one of the first radial flange and the second radial flange such that dimensions of the two or more radial cavities is generally equal to dimensions of the axially aligned first gaps and the second gaps. Further, a number of two or more radial cavities is equal to a number of first gaps or a number of second gaps.

In an embodiment, each of the two or more inserts is a T-shaped structure having a first portion and a second portion disposed orthogonal to each other. In the flange coupling arrangement, the second portion of each of the two or more inserts is received via the corresponding radial cavity into the corresponding mutually aligned pair of the first gap and the second gap therewith. In the present embodiment, the first portion of the two or more inserts is a flat portion having an arc length and an arc width substantially greater than a thickness thereof. Further, the second portion of the two or more inserts is a solid cuboidal portion having an arc length and an arc width equal to or more than a thickness thereof. Moreover, the first portion has the arc length greater than an arc length of a corresponding radial cavity and the second portion has the arc length substantially equal to the arc length of the corresponding radial cavity. It will be appreciated that the arc thickness of the first portion is substantially less than the arc thickness of the second portion of the two or more inserts. The second portion is disposed orthogonal to the first portion, therefore when the second portion of the two or more inserts is received via the radial cavity, the second portion is accommodated in the mutually aligned pair of the first gap and the second gap, whereas the first portion comes in contact with and sits on an opposing face to the mating face of one of the first radial flange or the second radial flange in which the radial cavity is provided.

In an embodiment, a volume of the second portion is substantially equal to a volume of a space defined by the corresponding mutually aligned pair of the first gap and the second gap and the corresponding radial cavity. The second portion is accommodated in the space defined by the corresponding mutually aligned pair of the first gap and the second gap and the corresponding radial cavity. When the insert is arranged in one of the axially aligned pairs of the first gap and the second gap via the radial cavity, a face of the second portion opposite to the first portion comes in contact with the mating face of the other radial flange (such as the first radial flange or the second radial flange not having the radial cavity). Since the arc length of the first portion is greater than the arc length of the corresponding radial cavity; therefore, the first portion is obstructed against and overlaps with an opposing face to the mating face of the first radial flange or an opposing face to the mating face of the second radial flange in which the radial cavity is provided.

In an embodiment, each of the two or more first projections comprises two first apertures therein and each of the two or more second projections comprises two second apertures therein. The two first apertures of one of the two or more first projections are co-axial with the two second apertures of corresponding axially aligned one of the two or more second projections. Throughout the present disclosure, the term "*apertures*" refers to circular through-holes extending from one face of a projection to an opposing face of the same projection comprising the apertures. The two first apertures are spaced apart and placed towards edges of each of the two or more first projections. Notably, a distance between each of the two first apertures on each of the two or more first projections is equal. Each of the two or more second projections comprises two second apertures such that the two second apertures are spaced apart and placed towards edges of the two or more second projections. Further, a distance between the two second apertures on each of the two or more second projections is equal. Therefore, it will be appreciated that the two first apertures are co-axial with the two second apertures, when the first radial flange is axially aligned with the second radial flange.

In an embodiment, the mating face of the first radial flange comprises third apertures coaxial with the two first apertures of each of the two or more first projections and the mating face of the second radial flange comprises fourth apertures coaxial with the two second apertures of each of the two or more second projections. The third apertures are formed in the mating face of the first radial flange such that the third apertures are placed parallel to, and co-axial with the first apertures of the two or more first projections. Similarly, the fourth apertures are placed on the mating face of the second radial flange such that the fourth apertures are placed parallel to, and co-axial with the second apertures of the two or more second projections.

In an embodiment, the first portion of each of the two or more inserts comprises two fifth apertures therein, wherein each of the two fifth apertures are coaxial with one of the two first apertures of two adjacent first projections. The two fifth apertures of the first portion are placed towards lateral ends of each of the first portion of the two or more inserts. The two fifth apertures of the first portion are placed equidistant with respect to the lateral ends of the first portion. The fifth apertures align coaxially with nearest one of the two first apertures of two adjacent first projections, when the two or more inserts are arranged in the corresponding radial cavities (and with corresponding two second apertures, two third apertures and two fourth apertures, when the first radial flange and the second radial flange are axially aligned).

It will be appreciated that a diameter of each of the two first apertures, the two second apertures, the third apertures, the fourth apertures and the two fifth apertures is equal. In some examples, the number of apertures in the first radial flange, the second radial flange and the two or more inserts may be more than two. It will be appreciated that, in such case, a number of the first apertures, number of the second apertures, number of the third apertures, number of the fourth apertures and number of the fifth apertures are equal.

In an embodiment, the flange coupling arrangement further comprises a bolt engaged with mutually coaxial one of the two first apertures, one of the two second apertures, one of the third apertures, one of the fourth apertures and one of the two fifth apertures. As discussed, once the first radial flange and the second radial flange are axially aligned; the two first apertures, the two second apertures, the third apertures, the fourth apertures and the two fifth apertures are also axially aligned. The bolt is engaged with the mutually coaxial one of the two first apertures, one of the two second apertures, one of the third apertures, one of the fourth apertures and one of the two fifth apertures such that the bolt enters from one of the two fifth apertures, passes through one of the fourth apertures, one of the two second apertures, one of the two first apertures, to be received by one of the third apertures. Similarly, one another bolt is engaged with the mutually coaxial other aperture of the two first apertures, other aperture of the two second apertures, one of the third apertures, one of the fourth apertures and other of the two fifth apertures such that the bolt enters from other aperture of the two fifth apertures, passes through the corresponding fourth aperture, the corresponding second aperture, the corresponding first aperture, to be received by the corresponding third aperture.

The flange coupling arrangement of the present disclosure can be implemented for coupling of components, such as a first member and a second member, in a gas turbine engine. For this implementation, the first radial flange is operatively coupled to the first member of the gas turbine engine. It will be appreciated that a diameter of the first member corresponds to the diameter of the inner annular periphery of the first radial flange, such that the first member is generally accommodated in the hollow portion of the first radial flange. Similarly, the second radial flange is operatively coupled to the second member of the gas turbine engine. It will be appreciated that a diameter of the second member corresponds to the diameter of the inner annular periphery of the second radial flange, such that the second member is accommodated in the hollow portion of the second radial flange. In an example, the first member and the second member can be shafts such that the first radial flange and the second radial flange are arranged along ends of the respective shafts, by aligning the rear side of the mating face thereof with a planar end surface of the respective shaft. The coupling of the first radial flange and the second radial flange in the flange coupling arrangement (as described above), in turn, results in coupling of the first member and the second member of the gas turbine engine.

In an embodiment, the first member is a first casing in the gas turbine engine and the second member is a second casing in the gas turbine engine with the second casing being in line with the first casing, such that the flange coupling arrangement couples the first member to the second member to prevent relative rotation therebetween. The flange coupling arrangement may be used to couple static members such as the casings in the gas turbine engine. In such a case, a diameter of the first casing corresponds to the inner annular periphery of the first radial flange, and a diameter of the second casing corresponds to the inner annular periphery of the second radial flange. The first radial flange when axially aligned with the second radial flange, therefore, couples the first casing and the second casing in the gas turbine engine, thereby preventing the relative rotation between the first casing and the second casing.

In an embodiment, the first member is a driving component of a turbine of the gas turbine engine and the second member is a driven component of a compressor of the gas turbine engine such that the flange coupling arrangement enables transmission of torque from the first member to the second member, during operation of the gas turbine engine. For example, the first member can be the driving component of the gas turbine, such as, an output shaft of a draft turbine that is rotated during operation of the gas turbine engine. The second member can be the driven component of the compressor, such as, an input shaft of the compressor that is to be rotated, to enable operation of the compressor. In such an example, mutual coupling of the first radial flange (coupled to the first member) with the second radial flange (coupled to the second member) enables coupling of the first member with the second member and the rotation of the first member is transmitted as torque to the second member.

During the coupling of the first radial flange with the second radial flange, the mating face of the first radial flange is coupled with a front of the two or more second projections of the second radial flange. Moreover, a rear of the two or more second projections of the second radial flange is coupled with a rear of the two or more first projections of the first radial flange. Further, a front of the two or more first projections of the first radial flange is coupled with the mating face of the second radial flange. Such a coupling that is achieved between the mating faces of the first and second radial flanges, the two or more first projections and the two or more second projections enables reduction of bending moment experienced by the radial flanges and consequently, the first and second members. For example, a normal reaction exerted by such a coupling of one first projection with a corresponding second projection (referred to as "*first set of projections*") will be parallel to, and along the axial direction of each of the first radial flange and the second radial flange. However, a normal reaction exerted by the coupling of an adjacent second projection with a corresponding first projection (referred to as "*second set of projections*") will be parallel to, and against the axial direction of each of the first radial flange and the second radial flange. In such an example, a bending moment exerted by the first set of projections on the second set of projections due to the normal reaction acting along the axial direction, will be equal in magnitude and opposite in direction to the bending moment exerted by the second set of projections on the first set of projections due to the normal reaction acting against the axial direction. Thus, the bending moments produced due to coupling of the first projections and the second projections during the transmission of torque between the first member and the second member are substantially cancelled against each other. As the bending moments are carried by the first and second set of projections and/or the flanges the load on the bolt is reduced compared to a prior art design. Thus, the number of the bolts or the size of the bolts can be reduced or a less resistant material can be used. Further, the flange can be analyzed easier. Also the material of the flange can be higher loaded and there is more material test data available. Therefore, the lifing assessment of the sets of projections and/or the flange is less uncertain.

The present disclosure further provides a method of coupling a first radial flange with a second radial flange is provided. The method of coupling a first radial flange with a second radial flange comprises providing the first radial flange with a mating face, an extended portion and two or more first projections such that the two or more first projections are axially spaced apart from the mating face and the extended portion extends between the mating face and the two or more first projections therein, and the two or more first projections are disposed along periphery of the extended portion of the first radial flange to define first gaps therebetween.

Further, the method comprises providing the second radial flange with a mating face, an extended portion and two or more second projections such that the two or more second projections are axially spaced apart from the mating face and the extended portion extends between the mating face and the two or more second projections therein, and the two or more second projections are disposed along periphery of the extended portion of the second radial flange to define second gaps therebetween.

Further, the method comprises aligning, axially, the two or more second projections with the first gaps such that the two or more second projections are in contact with the mating face of the first radial flange.

Further, the method comprises rotating the second radial flange such that the two or more second projections are received in between the mating face of the first radial flange and the corresponding two or more first projections, and such that the two or more first projections with the two or more second projections, and the respective first gaps with the second gaps therebetween, are axially aligned with each other, to axially align the first radial flange and the second radial flange with each other.

Further, the method comprises providing two or more inserts. Furthermore, the method comprises arranging each of the two or more inserts in one of axially aligned pairs of the first gap and the second gap.

In an embodiment, the method further comprises providing the mating face of one of the first radial flange and the second radial flange with two or more radial cavities such that each of the two or more radial cavities is mutually aligned with one of the axially aligned pairs of the first gap and the second gap, when the first radial flange and the second radial flange are axially aligned with each other.

In an embodiment, the method further comprises forming each of the two or more inserts as a T-shaped structure having a first portion and a second portion disposed orthogonal to each other with the first portion having an arc length greater than an arc length of a corresponding radial cavity and the second portion having an arc length substantially equal to the arc length of the corresponding radial cavity; and receiving the second portion of each of the two or more inserts via the corresponding radial cavity into the corresponding mutually aligned pair of the first gap and the second gap therewith, when the first radial flange and the second radial flange are axially aligned with each other.

In an embodiment, the method further comprises providing each of the two or more first projections with two first apertures therein and each of the two or more second projections with two second apertures therein such that the two first apertures of one of the two or more first projections are co-axial with the two second apertures of corresponding axially aligned one of the two or more second projections, when the first radial flange and the second radial flange are axially aligned with each other; providing the mating face of the first radial flange with third apertures such that the third apertures are coaxial with the two first apertures of each of the two or more first projections, when the first radial flange and the second radial flange are axially aligned with each other; providing the mating face of the second radial flange with fourth apertures such that the fourth apertures are coaxial with the two second apertures of each of the two or more second projections, when the first radial flange and the second radial flange are axially aligned with each other; providing the first portion of each of the two or more inserts with two fifth apertures therein such that each of the two fifth apertures are coaxial with one of the two first apertures of two adjacent first projections, when the first radial flange and the second radial flange are axially aligned with each other; and engaging a bolt with mutually coaxial one of the two first apertures, one of the two second apertures, one of the third apertures, one of the fourth apertures and one of the two fifth apertures, when the first radial flange and the second radial flange are axially aligned with each other.

### DETAILED DESCRIPTION OF THE DRAWINGS

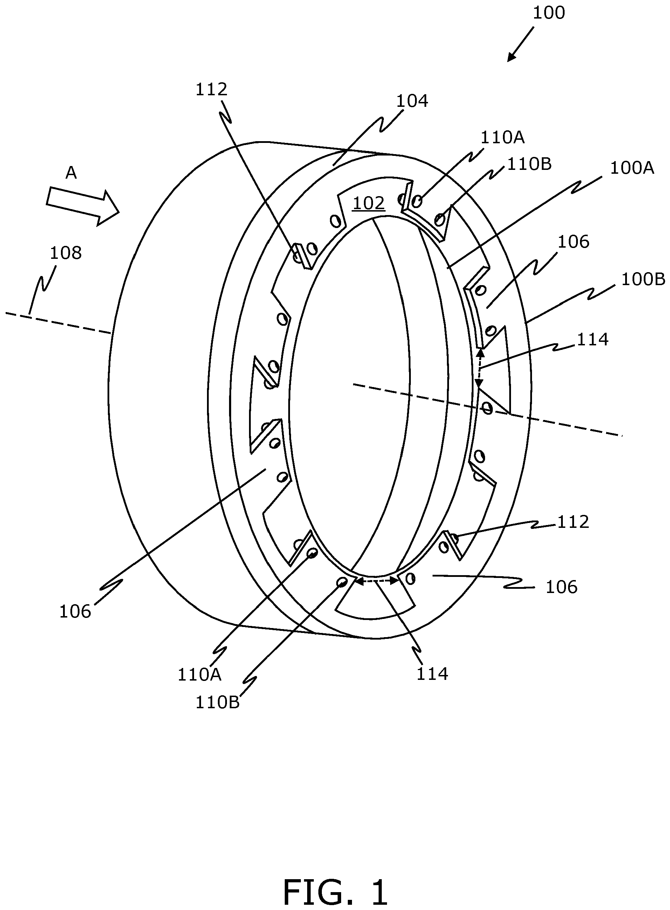

Referring to FIG. 1, illustrated is a schematic representation of a perspective view of a first radial flange **100,** in accordance with an embodiment of the present disclosure. As shown, the first radial flange **100** is a hollow cylindrical structure having an inner annular periphery **100A** and an outer annular periphery **100B.** The first radial flange **100** comprises a mating face **102,** an extended portion **104** and two or more first projections (such as, first projections **106**). The extended portion **104** extends from the outer annular periphery **100B.** The two or more first projections **106** are axially spaced apart (such as, in an axial direction '**A**') from the mating face **102,** and the extended portion **104** extends between the mating face **102** and the two or more first projections **106** in the axial direction '**A**'. The two or more first projections **106** are connected perpendicularly to periphery of the extended portion **104.** Herein, the two or more first projections **106** are parallel to the mating face **102,** and extend towards a central axis **108** of the first radial flange **100.** Notably, the central axis **108** is parallel to the axial direction '**A**'. Further, each of the first projections **106** comprises two first apertures **110A** and **110B** and the mating face **102** comprises third apertures **112.** As shown, the two or more first projections **106** are disposed along the periphery of the extended portion **104** to define first gaps, such as first gaps **114.** It will be appreciated that the first projections **102** and the first gaps **114** are provided in the first radial flange **100** in an alternate manner.

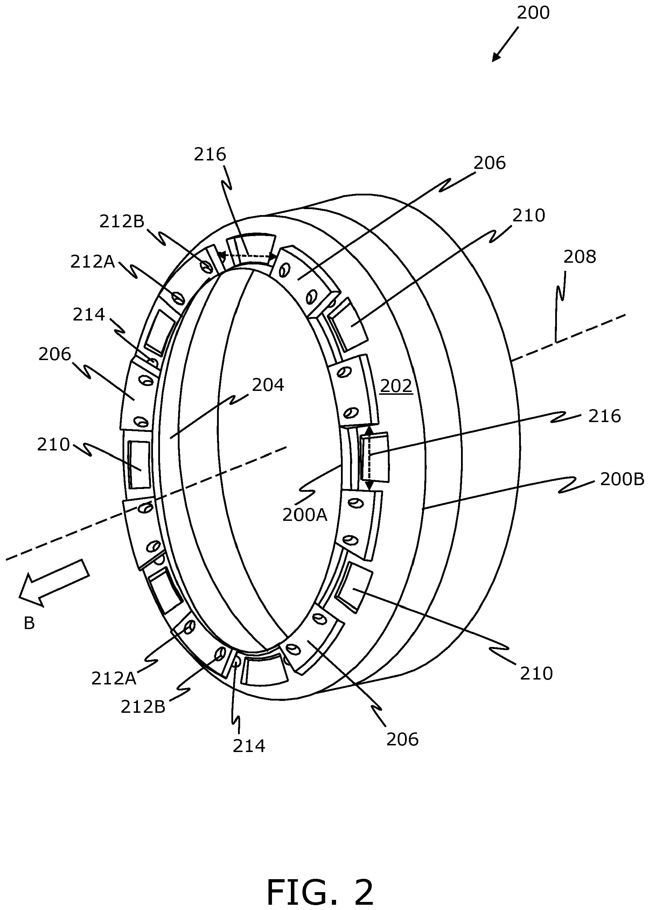

Referring to FIG. 2, illustrated is a schematic representation of perspective view of a second radial flange **200,** in accordance with an embodiment of the present disclosure. As shown, the second radial flange **200** is a hollow cylindrical structure having an inner annular periphery **200A** and an outer annular periphery **200B.** The second radial flange **200** comprises a mating face **202,** an extended portion **204** and two or more second projections (such as, second projections **206**). The extended portion **204** extends from the inner annular periphery **200A.** The two or more second projections **206** are axially spaced apart (such as, in an axial direction **'B'**) from the mating face **202,** and the extended portion **204** extends between the mating face **202** and the two or more second projections **206** in the axial direction '**B**'. The two or more second projections **206** are connected perpendicularly to periphery of the extended portion **204.** Herein, the two or more second projections **206** are parallel to the mating face **202,** and extend away from a central axis **208** of the second radial flange **200.** Notably, the central axis **208** is parallel to the axial direction **'B'**. The second radial flange **200** also comprises two or more radial cavities, such as the radial cavities **210** in the mating face **202.** Further, each of the two or more second projections **206** comprises two second apertures **212A** and **212B** and the mating face **202** comprises fourth apertures **214.** As shown, the two or more second projections **206** are disposed along periphery of the extended portion **204** of the second radial flange **200** to define second gaps, such as second gaps **216.** It will be appreciated that the second projections **202** and the second gaps **216** are provided in the second radial flange **200** in an alternate manner.

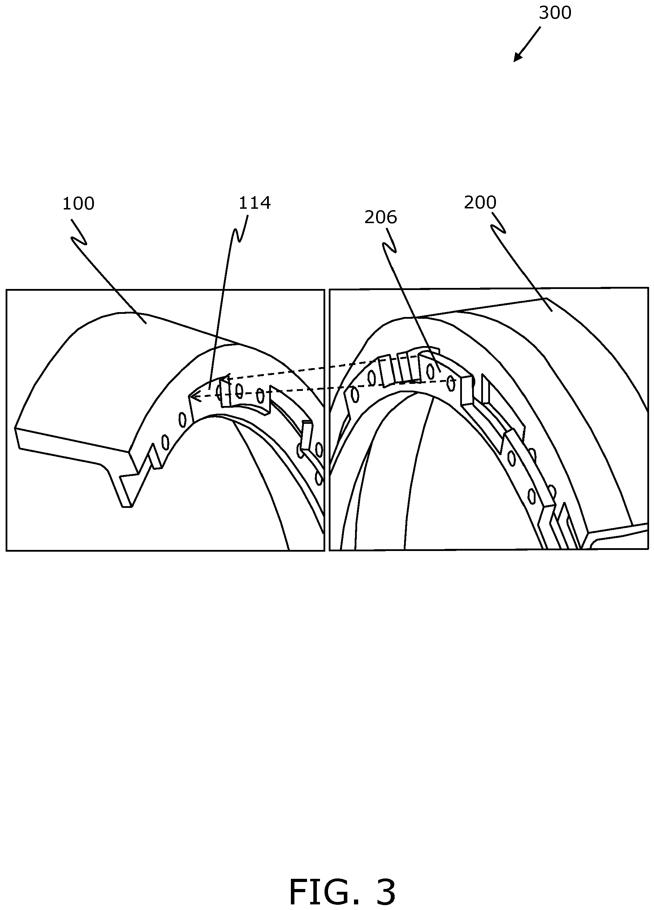

Referring to FIG. 3, illustrated is a diagrammatic representation of an arrangement **300** depicting a step involved in alignment of the first radial flange of FIG. 1 and the second radial flange of FIG. 2, in accordance with an embodiment of the present disclosure. For the sake of clarity only a portion of the first radial flange **100** and a portion of the second radial flange **200** are shown in an enlarged manner. As shown, firstly, the second projection **206** of the second radial flange **200** is aligned with the corresponding first gap **114** of the first radial flange **100.** For coupling the first radial flange **100** with the second radial flange **200,** each of the second projections **206** of the second radial flange **200** are aligned with the corresponding first gaps **114** of the first radial flange **100.** Notably, for the sake of clarity and visibility, the central axis of the first radial flange **100** and the central axis of the second radial flange **200** are not shown to be aligned herein; however, it will be appreciated that for the coupling of first radial flange **100** with the second radial flange **200,** each of the second projections **206** of the second radial flange **200** are aligned with each of the corresponding first gaps **114** of the first radial flange **100** while the central axis of the first radial flange **100** and the central axis of the second radial flange **200** mutually coincide.

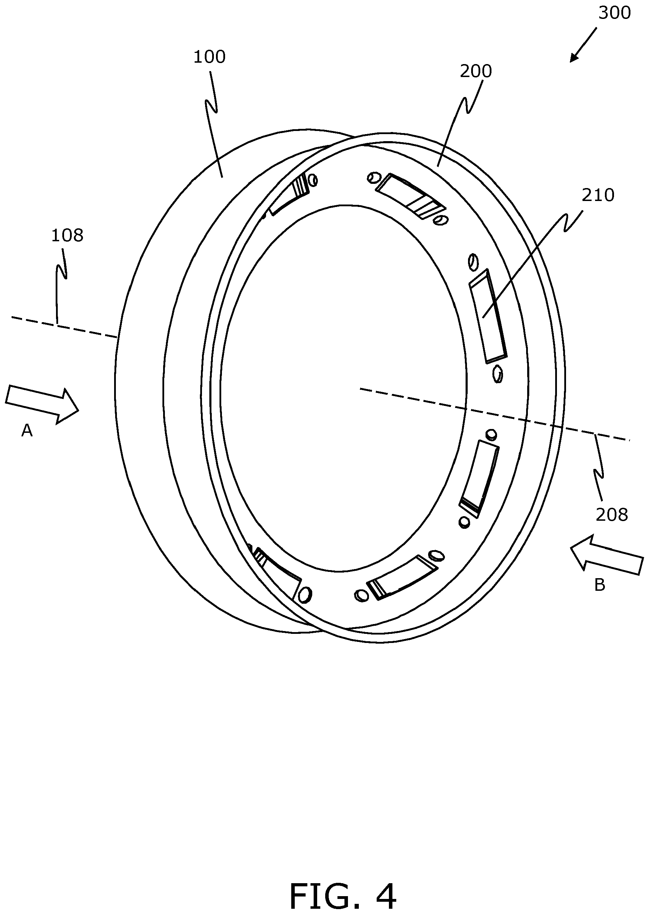

Referring to FIG. 4, illustrated is a schematic representation of a perspective view of an arrangement **400** obtained by axially aligning the first radial flange **100** of FIG. 1 and the second radial flange **200** of FIG. 2, in accordance with an embodiment of the present disclosure. As shown, the first radial flange **100** and the second radial flange **200** are mutually aligned such that the central axis **108** of the first radial flange **100** and the central axis **208** of the second radial flange **200** coincide with each other. Notably, the first radial flange **100** and the second radial flange **200** are also aligned such that the axial direction **'A'** and the axial direction **'B'** are aligned as shown. Although not shown, in the arrangement **400,** the two or more second projections are aligned with the first gaps such that the two or more second projections are in contact with the mating face of the first radial flange **100.** It may be appreciated that the arrangement **400** is obtained by rotating the second radial flange **200** in the arrangement **300** (as shown in FIG. 3), such that the two or more second projections are, thereafter, received in between the mating face of the first radial flange **100** and the corresponding two or more first projections. Notably, in the arrangement **400,** the two or more first projections are axially aligned with the two or more second projections, and the respective first gaps are axially aligned with the second gaps and the respective radial cavities **210** to couple the first radial flange **100** and the second radial flange **200** with each other.

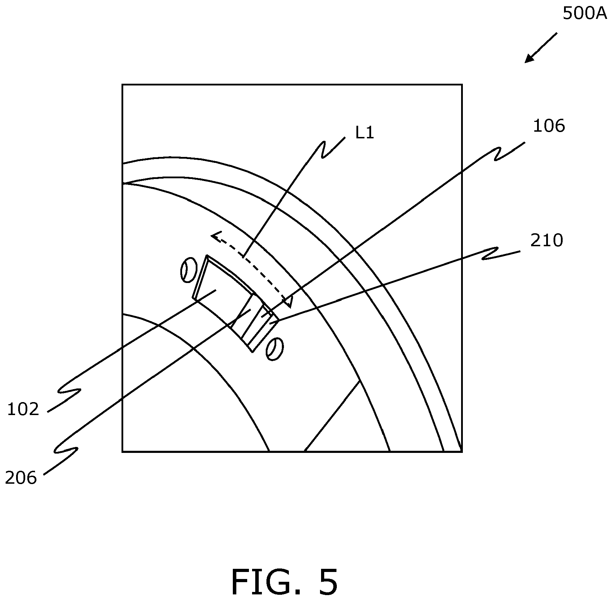

Referring to FIG. 5, illustrated is a partial perspective view of the arrangement **400** of FIG. 4 showing an enlarged view of the radial cavity **210** therein, in accordance with an embodiment of the present disclosure. As shown, one of the two or more second projections **206** is received in between the mating face **102** of the first radial flange **100** and one of the two or more first projections **106,** as seen through an arc length **'L1'** of the radial cavity **210** of the second radial flange **200.** Notably, the mating face **102,** the second projection **206,** and the first projection **106** are co-axially aligned such that the space between the mating face **102,** the second projection **206,** and the first projection **106** is negligible.

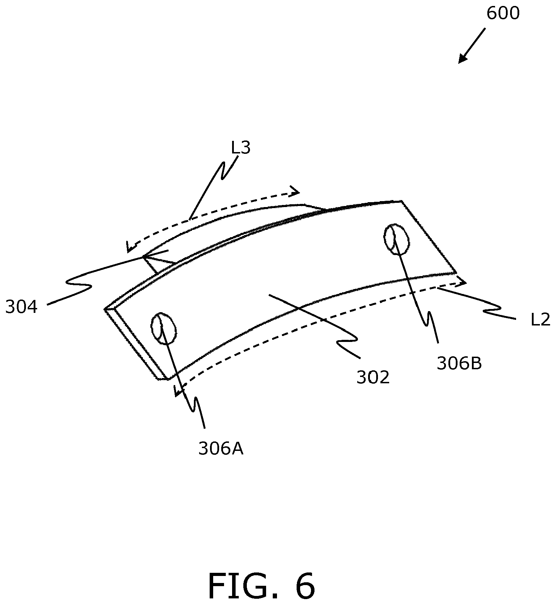

Referring to FIG. 6, illustrated is a perspective view of an insert **600,** in accordance with an embodiment of the present disclosure. As shown, the insert **600** is a T-shaped structure having a first portion **302** and a second portion **304** disposed orthogonal to each other. The first portion **302** has an arc length **'L2'** greater than an arc length (such as the arc length **'L1',** as shown in FIG. 5) of a corresponding radial cavity (such as the radial cavity **210** as shown in FIG. 5) and the second **304** portion has an arc length **'L3'** substantially equal to the arc length **'L1'** of the corresponding radial cavity. The insert **600** also comprises two fifth apertures **306A** and **306B** spatially spaced apart with each other.

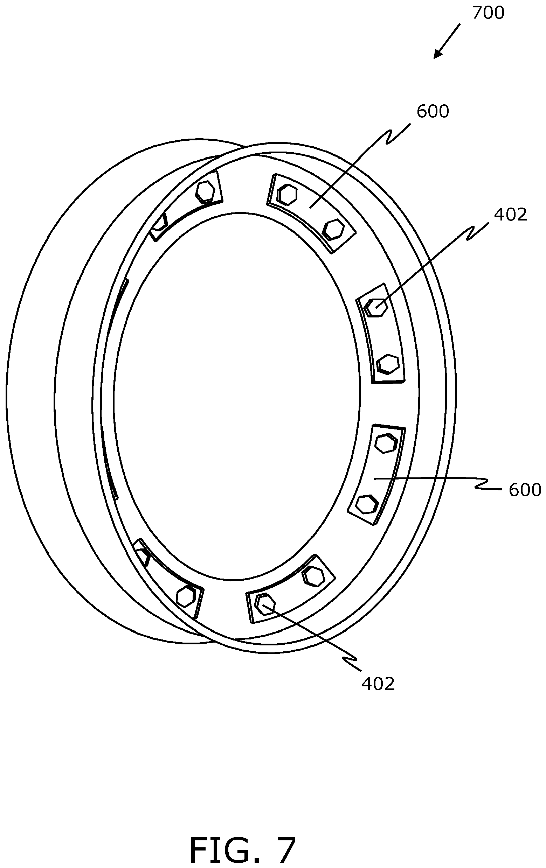

Referring to FIG. 7, illustrated is a perspective view of a flange coupling arrangement **700,** in accordance with an embodiment of the present disclosure. In the flange coupling arrangement **700,** the two or more inserts, such as insert **600** of FIG. 6, are inserted via the radial cavity (such as, the radial cavity **210**) of the arrangement **400** (as shown in FIG. 4). Although not shown, the second portion of each of the two or more inserts **600** is received via the radial cavity into the corresponding mutually aligned pair of the first gap and the second gap. Further, each of the two fifth apertures of the inserts **600** are coaxially aligned with each of the corresponding two first apertures of the first projections. Further, as shown, the flange coupling arrangement **700** comprises two or more bolts **402.** Each of the bolts **402** are engaged with the corresponding one of the two first apertures (of the first projections), one of the two second apertures (of the second projections), one of the third apertures (of the first radial flange), one of the fourth apertures (of the second radial flange) and one of the two fifth apertures (of the inserts) which, in turn, are coaxial with each other therein.

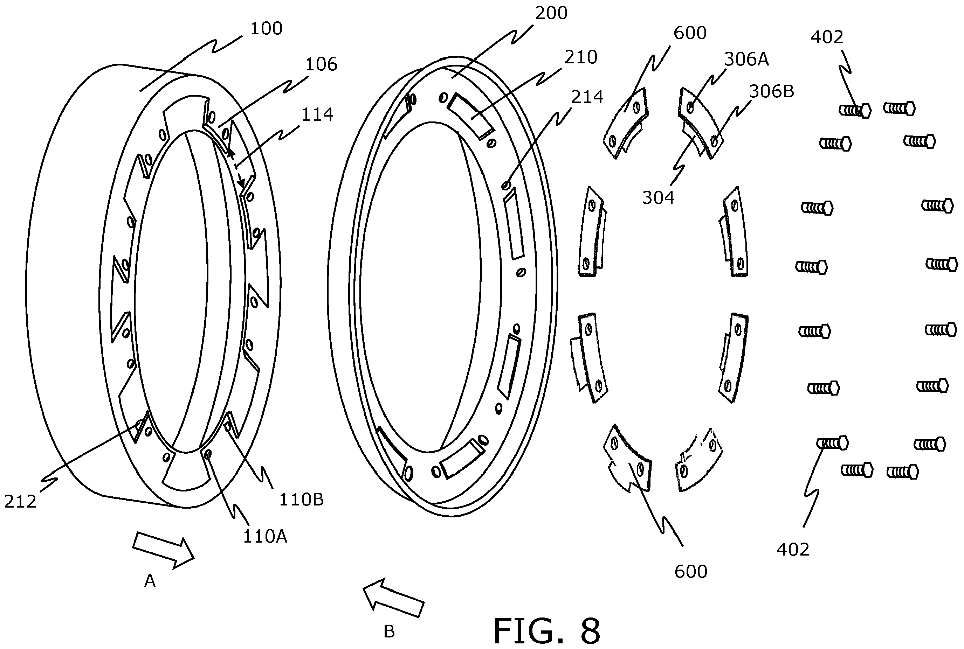

Referring to FIG. 8, illustrated is an exploded view of the flange coupling arrangement **700** of FIG. 7, in accordance with an embodiment of the present disclosure. The flange coupling arrangement **700** comprises the first radial flange **100,** the second radial flange **200,** the two or more inserts **600,** and the two or more bolts **402.** In order to assemble the flange coupling arrangement **700,** the second radial flange **200** is co-axially aligned (the axial direction **A** is aligned with the axial direction **B)** with the first radial flange **100** such that each of the radial cavity **210** of the second radial flange **200** is aligned with the corresponding first projections **106** of the first radial flange **100.** First, the first gaps **114** receive the corresponding second projections **206,** and then the second radial flange **200** is rotated to align each of the second projections **206** with the corresponding first projections **106.** Further, each of the two or more inserts **600** is arranged in the second radial flange **200.** The second portion **304** of the insert **600** is inserted into the corresponding radial cavity **210** and the two fifth apertures **306A** and **306B** are aligned with the corresponding fourth apertures **214,** one on each side of the radial cavity **210.** Further, each of the two or more bolts **402** are engaged with the corresponding one of the two first apertures **110A** or **110B** (of the first projections **106),** one of the two second apertures **212A** or **212B** (of the second projections **206),** one of the third apertures **112** (of the first radial flange **100),** one of the fourth apertures **214** (of the second radial flange **200)** and one of the two fifth apertures **306A or 306B** (of the inserts **600).**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A flange coupling arrangement (700) comprising:
a first radial flange (100) having a mating face (102), an extended portion (104) and two or more first projections (106) such that the two or more first projections are axially spaced apart from the mating face and the extended portion extends between the mating face and the two or more first projections therein, wherein the two or more first projections are disposed along periphery of the extended portion of the first radial flange to define first gaps (114) therebetween;
a second radial flange (200) having a mating face (202), an extended portion (204) and two or more second projections (206) such that the two or more second projections are axially spaced apart from the mating face and the extended portion extends between the mating face and the two or more second projections therein, wherein the two or more second projections are disposed along periphery of the extended portion of the second radial flange to define second gaps (216) therebetween; and
two or more inserts (600),
wherein the first radial flange and the second radial flange are axially aligned with each other such that the two or more second projections are received in between the mating face of the first radial flange and the corresponding two or more first projections, and such that the two or more first projections with the two or more second projections, and the respective first gaps with the second gaps therebetween, are axially aligned with each other, and
wherein each of the two or more inserts is arranged in one of axially aligned pairs of the first gap and the second gap.

2. The flange coupling arrangement of claim 1, wherein each of the first radial flange (100) and the second radial flange (200) has an inner annular periphery (100A, 200A) and an outer annular periphery (100B, 200B), and wherein the extended portion (104) of the first radial flange is extending from the outer annular periphery thereof and the extended portion of the second radial flange is extending from the inner annular periphery thereof, and wherein the two or more first projections (106) are connected perpendicularly to the periphery of the extended portion of the first radial flange and extend towards a central axis (108) of the first radial flange, and the two or more second projections (206) are connected perpendicularly to the periphery of the extended portion of the second radial flange and extend away from a central axis (208) of the second radial flange.

3. The flange coupling arrangement of any of claims 1 or 2, wherein the two or more first projections (106) are equiangularly disposed along the periphery of the extended portion (104) of the first radial flange (100) and the two or more second projections (206) are equiangularly disposed along the periphery of the extended portion (204) of the second radial flange.

4. The flange coupling arrangement of any of the preceding claims, wherein the mating face (102, 202) of one of the first radial flange (100) and the second radial flange (200) comprises two or more radial cavities (210), and wherein each of the two or more radial cavities is mutually aligned with one of the axially aligned pairs of the first gap (114) and the second gap (216).

5. The flange coupling arrangement of any of the preceding claims, wherein each of the two or more inserts (600) is a T-shaped structure having a first portion (302) and a second portion (304) disposed orthogonal to each other with the first portion having an arc length (L2) greater than an arc length (L1)of a corresponding radial cavity (210) and the second portion having an arc length (L3) substantially equal to the arc length of the corresponding radial cavity, and wherein the second portion of each of the two or more inserts is received via the corresponding radial cavity into the corresponding mutually aligned pair of the first gap (114) and the second gap (216) therewith.

6. Method of coupling a first radial flange (100) with a second radial flange (200) comprising:
- providing the first radial flange (100) with a mating face (102), an extended portion (104) and two or more first projections (106) such that the two or more first projections are axially spaced apart from the mating face and the extended portion extends between the mating face and the two or more first projections therein, and the two or more first projections are disposed along periphery of the extended portion of the first radial flange to define first gaps (114) therebetween,
- providing the second radial flange (200) with a mating face (202), an extended portion (204) and two or more second projections (206) such that the two or more second projections are axially spaced apart from the mating face and the extended portion extends between the mating face and the two or more second projections therein, and the two or more second projections are disposed along periphery of the extended portion of the second radial flange to define second gaps (216) therebetween,
- providing two or more inserts (600), and
- aligning, axially, the two or more second projections with the first gaps such that the two or more second projections are in contact with the mating face of the first radial flange,
- rotating the second radial flange such that the two or more second projections are received in between the mating face of the first radial flange and the corresponding two or more first projections, and such that the two or more first projections with the two or more second projections, and the respective first gaps with the second gaps therebetween, are axially aligned with each other, to axially align the first radial flange and the second radial flange with each other,
- arranging each of the two or more inserts in one of axially aligned pairs of the first gap and the second gap.

7. Method according to claim 6, further comprising providing the mating face of one of the first radial flange and the second radial flange with two or more radial cavities (210) such that each of the two or more radial cavities is mutually aligned with one of the axially aligned pairs of the first gap and the second gap, when the first radial flange and the second radial flange are axially aligned with each other.

8. Method according to claim 6 or 7, further comprising forming each of the two or more inserts as a T-shaped structure having a first portion (302) and a second portion (304) disposed orthogonal to each other with the first portion having an arc length (L2) greater than an arc length (L1) of a corresponding radial cavity (210) and the second portion having an arc length (L3) substantially equal to the arc length of the corresponding radial cavity; and receiving the second portion of each of the two or more inserts via the corresponding radial cavity into the corresponding mutually aligned pair of the first gap and the second gap therewith, when the first radial flange and the second radial flange are axially aligned with each other.

9. Method according to anyone of claims 6 to 8, further comprising:
- providing each of the two or more first projections with two first apertures therein and each of the two or more second projections with two second apertures therein such that the two first apertures of one of the two or more first projections are co-axial with the two second apertures of corresponding axially aligned one of the two or more second projections, when the first radial flange and the second radial flange are axially aligned with each other,
- providing the mating face of the first radial flange with third apertures such that the third apertures are coaxial with the two first apertures of each of the two or more first projections, when the first radial flange and the second radial flange are axially aligned with each other,
- providing the mating face of the second radial flange with fourth apertures such that the fourth apertures are coaxial with the two second apertures of each of the two or more second projections, when the first radial flange and the second radial flange are axially aligned with each other,
- providing the first portion of each of the two or more inserts with two fifth apertures therein such that each of the two fifth apertures are coaxial with one of the two first apertures of two adjacent first projections, when the first radial flange and the second radial flange are axially aligned with each other, and
- engaging a bolt with mutually coaxial one of the two first apertures, one of the two second apertures, one of the third apertures, one of the fourth apertures and one of the two fifth apertures, when the first radial flange and the second radial flange are axially aligned with each other.
